# EUROPÄISCHE PATENTANMELDUNG

(11) **EP 0 772 320 A2**
(43) Veröffentlichungstag der Anmeldung: **07.05.1997**
(21) Anmeldenummer: 96113219.8
(22) Anmeldetag: 17.08.1996
(51) Int. Cl.: H04L 12/40

(54) **Anordnung zur Signalübertragung über einen Feldbus**

(30) Priorität: 27.10.1995 DE 19540093
(71) Anmelder: GESTRA AG, D-28215 Bremen (DE)
(72) Erfinder: Hansemann, Heinrich, 28277 Bremen (DE); Politt, Joachim-Christian, Dr., 28215 Bremen (DE); Laupichler, Herbert, 28844 Weyhe (DE); Schmitz, Günter, 26121 Oldenburg (DE); Müller, Jan-Hermann, 27798 Hude (DE); Schröter, Holger, 28832 Achim (DE)
(74) Vertreter: Eisenführ, Speiser & Partner

(57) **Zusammenfassung**

In Meß- und Überwachungssystemen technischer Anlagen wurde bislang jeder Signalgeber über ein separates Kabel mit dem zugehörigen Signalempfänger verbunden. Die häufig notwendige Vielzahl von Signalgebern hat eine Vielzahl von Kabeln zur Folge. Die neue Anordnung sieht ein einziges Kabel mit vier elektrischen Leitern (16 - 19) vor. Zwei der Leiter (18, 19) bilden eine Feldbusleitung für die Signalübertragung und die übrigen beiden Leiter (16, 17) eine Energieleitung für die Energieversorgung. An dieses Kabel sind alle Signalgeber (1, 2) und Signalempfänger (3, 4) angeschlossen, und das Kabel (16 - 19) ist an beiden Enden mit einer Leitungsterminierung (20 - 22) versehen. Jeder Signalgeber (1, 2) und jeder Signalempfänger (3, 4) weist eine Feldbus-Steuereinrichtung (8, 10) auf, vorzugsweise CAN-Bus. Die gesamte Signalübertragung erfolgt über die zweiadrige Feldbusleitung (18, 19), wobei zwischen der Signalübertragung und dem Ruhezustand ein großer Störabstand besteht. Auch ist die Störempfindlichkeit gegen elektromagnetische Einstrahlung von außen besonders gering.

## Beschreibung

Die Erfindung betrifft eine Anordnung der im Oberbegriff des Hauptanspruches spezifizierten Art zur Signalübertragung.

In Meß- und Überwachungssystemen technischer Anlagen, z. B. in Kesselhäusern, war bislang jeder Meßwertaufnehmer (Signalgeber) über ein separates Kabel mit der zugehörigen Auswerteeinrichtung (Signalempfänger) verbunden. Die häufig notwendige Vielzahl von Signalgebern - z. B. für Temperaturüberwachung, Drucküberwachung, Sicherheitsüberwachung eines Mindestflüssigkeitsstandes, Sicherheitsüberwachung eines Höchstflüssigkeitsstandes, Ermittlung des aktuellen Flüssigkeitsstandes - hat eine Vielzahl von Kabeln zur Folge. Insbesondere bei größeren Abständen zwischen den Signalgebern und den Signalempfängern, z. B. wenn letztere in einem entfernt gelegenen Kontrollzentrum angeordnet sind, stellt die Verkabelung einen wesentlichen Kostenfaktor dar.

Der Erfindung liegt die Aufgabe zugrunde, eine Anordnung der eingangs genannten Art zu schaffen, deren Verkabelungsaufwand gering ist.

Diese Aufgabe wird durch die im Anspruch 1 angegebenen Merkmale gelöst.

Die Signalübertragung zwischen den Signalgebern und den Signalempfängern erfolgt über die zweiadrige Feldbusleitung. Dabei koordinieren die Feldbus-Steuereinrichtungen der Signalgeber und Signalempfänger die Signalübertragung so, daß gegenseitige Störungen oder Beeinflussungen der Signale unterbunden sind. Die Signalübertragung muß nicht in jedem Fall nur zwischen einem Signalgeber und einem Signalempfänger erfolgen. Das Signal eines Signalgebers kann beispielsweise auch von mehreren Signalempfängern aufgenommen und genutzt werden. Die Feldbus-Steuereinrichtungen lassen hier vielfältige Kombinationen zu. Zusätzlich zur Feldbusleitung verläuft in dem Leitungssystem eine zweiadrige Energieleitung, die die Versorgungsspannung führt, wobei an beiden Enden des Leitungssystem eine Terminierung vorhanden ist. Somit liegt an beiden Enden der Feldbusleitung die elektrische Spannung auf gleichem Potential, so daß in der Feldbusleitung kein Ausgleichsstrom fließt und der Energieverbrauch gering ist. Zugleich besteht zwischen der bei Signalübertragung in der Feldbusleitung herrschenden Spannung und der dort im Ruhezustand vorhandenen ein großer Unterschied, es besteht ein sogenannter großer Störabstand. Durch den Bezug auf dasselbe Potential ist die Störempfindlichkeit gegen elektromagnetische Einstrahlung von außen besonders gering. Die Verbindung aller Signalgeber und -empfänger über die gemeinsame Energieleitung bietet vielfältige Möglichkeiten der Energieversorgung. Dabei ist in jedem Fall sichergestellt, daß an allen angeschlossenen Signalgebern und -empfängern nicht nur dieselbe Versorgungsspannung anliegt, sondern daß sie auch in allen auf gleichem Potential liegt.

Die Unteransprüche haben vorteilhafte Weiterbildungen der Erfindung zum Gegenstand.

Für die Verwendung von Meßwertaufnehmern als Signalgeber sind die Merkmale des Anspruches 2 von Vorteil, insbesondere wenn die Meßwertaufnehmer über die Anlage "verstreut" angeordnet sind, also an örtlich sehr unterschiedlichen Stellen. Im Falle einer Störung an den Meßwertaufnehmern kann, da sie keine eigene Energiequelle besitzen, in einfacher Weise über die Energieleitung von zentraler Stelle aus ihre Energieversorgung ausgeschaltet werden. Nach erneutem Einschalten starten die Rechnereinheiten der Meßwertaufnehmer wieder von ihrem durch ihre Software definierten Grundzustand aus; es kommt zu keiner Verfälschung der Signaldaten.

Die Energieversorgung des/der Meßwertaufnehmer und des/der Signalempfänger kann beispielsweise über ein einziges, zentrales Netzgerät erfolgen, das die notwendige Energie in die Energieleitung einspeist. Gemäß Anspruch 3 kann aber auch einer oder können mehrere der Signalempfänger ein Netzteil aufweisen und die nötige Energie einspeisen. Die Einspeisleistung kann so jeweils in einfacher Weise auf den Bedarf von Signalempfänger und Signalgeber abgestimmt werden.

Der nach Anspruch 4 vorgesehene CAN-Feldbus zeichnet sich durch hohe Störsicherheit aus, da er mit differentiellen Übertragungssignalen arbeitet. Die beiden Binärzustände in einem Übertragungssignal werden durch positive und negative Spannungen in der Feldbusleitung dargestellt, und für die Signalerkennung ist die Polarität der Spannung entscheidend. Spannungsschwankungen sind weitestgehend ohne störenden Einfluß.

Die Merkmale des Anspruches 5 bieten eine besonders hohe Unempfindlichkeit des Feldbusses gegen elektromagnetischen Einstrahlungen von außen.

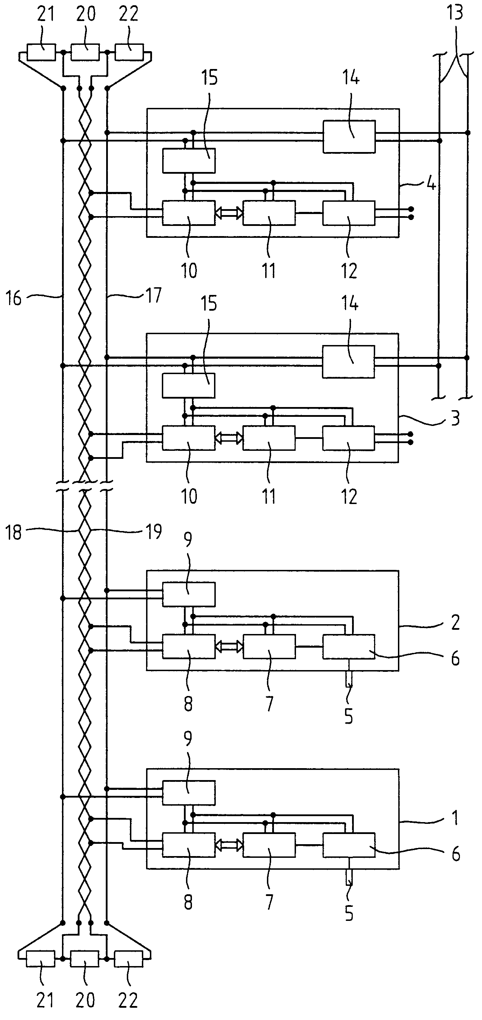

In der Zeichnung ist ein Ausführungsbeispiel der erfindungsgemäßen Anordnung zur Signalübertragung schematisch dargestellt.

Zur Überwachung von physikalischen Größen in einer Industrieanlage, z. B. in einer Kesselanlage (nicht dargestellt), sind als Signalgeber zwei dezentral angeordnete Meßwertaufnehmer 1, 2 und als Signalempfänger zwei zentral angeordnete Auswerteeinrichtungen 3, 4 vorgesehen.

Die Meßwertaufnehmer 1, 2 weisen jeweils einen Sensor 5 zur Ermittlung der zu überwachenden physikalischen Größe (z. B. Füllstand, Temperatur, Druck) auf. Er ist an eine Anpassungseinrichtung 6 angeschlossen, die mit einer Rechnereinheit 7 verbunden ist, die wiederum mit einer Feldbus-Steuereinrichtung 8 in Verbindung steht. Ein Spannungsumsetzer 9 ist jeweils für die Versorgung mit der für den Betrieb notwendigen Gleichsspannung vorgesehen. Jede Auswerteeinrichtung 3, 4 weist eine Feldbus-Steuereinrichtung 10 und eine damit verbundene Rechnereinheit 11 auf, die ein Ausgangsrelais 12 ansteuert. Ferner ist in jeder Auswerteeinrichtung 3, 4 ein mit dem allgemeinen Stromnetz 13 verbundenes Netzteil 14 als Energiequelle vorgesehen und ein daran angeschlossener Spannungsumsetzer 15 für die Versorgung mit der für den Betrieb notwendigen Gleichsspannung.

Als elektrisches Leitungssystem ist ferner ein Kabel mit vier Leitern 16 - 19 vorgesehen. Von ihnen bilden die beiden Leiter 16 und 17 eine Energieleitung. Die anderen beiden Leiter 18 und 19 sind miteinander verdrillt und bilden eine Feldbusleitung. An beiden Enden des Leitungssystems sind jeweils drei Widerstände 20 - 22 nach Art eines Spannungsteiler angeschlossen. Der eine Widerstand 20 ist zwischen die Enden der beiden Leiter 18 und 19 der Feldbusleitung geschaltet. Der zweite Widerstand 21 ist zwischen die Enden des einen Leiters 18 der Feldbusleitung und des einen Leiters 16 der Energieleitung und der dritte Widerstand 22 zwischen die Enden des zweiten Leiters 19 der Feldbusleitung und des zweiten Leiters 17 der Energieleitung geschaltet. Der Gesamtwiderstand der Widerstände 20 - 22 entspricht dem Wellenwiderstand der Feldbusleitung 18, 19. Die Feldbus-Steuereinrichtungen 8, 10 der Meßwertaufnehmer 1, 2 und der Auswerteeinrichtungen 3, 4 sind als CAN-Bus (Controller-Area-Network, siehe z. B. ISO 11898) ausgebildet und an die Feldbusleitungen 18, 19 angeschlossen. Mit der Energieleitung 16, 17 stehen die Netzteile 14 beider Auswerteeinrichtungen 3, 4 und auch die Spannungsumsetzer 9 beider Meßwertaufnehmer 1, 2 in Verbindung.

Im Betriebszustand liegt die Wechselspannung des allgemeinen Stromnetzes 13, z. B. 230 Volt, an den Netzteilen 14 an, die daraufhin eine Versorgungsgleichspannung erzeugen, z. B. 24 Volt. Sie wird innerhalb der Auswerteeinrichtungen 3, 4 von den Spannungsumsetzern 15 in die dort notwendige Betriebsspannung umgesetzt, z. B. 5 Volt. Die Netzteile 14 speisen die Versorgungsspannung auch in die Energieleitung 16, 17 ein. Daraus gelangt sie in die Spannungsumsetzer 9 der Meßwertaufnehmer 1, 2, die sie in die dort notwendige Betriebsspannung umsetzen.

Die Sensoren 5 der Meßwertaufnehmer 1, 2 geben ein der zu überwachenden physikalischen Größe entsprechendes elektrisches Signal an die Anpassungseinrichtung 6, die daraus ein für die Rechnereinheit 7 geeignetes Signal bildet, z. B. durch Verstärkung, Strombegrenzung, Analog-/Digitalumwandlung. Die Rechnereinheit 7 steuert die Kommunikation zwischen der Feldbus-Steuereinrichtung 8 und der Anpassungseinrichtung 6, und sie setzt das eingehende Signal in ein für die Übertragung geeignetes Datenformat um. In der Feldbus-Steuereinrichtung 8 werden die Signaldaten zu einem CAN-Bussignal komplettiert, das von dort in die Feldbusleitung 18, 19 gelangt. Dabei koordinieren die Feldbus-Steuereinrichtungen 8, 10 die Signalübertragung über die zweiadrige Feldbusleitung 18, 19 so, daß trotz mehrerer angeschlossener Meßwertaufnehmer 1, 2 und Auswerteeinrichtungen 3, 4 keine gegenseitige Störung oder Beeinflussung bei der Signalübertragung auftritt. Die Feldbus-Steuereinrichtung 10 jener Auswerteeinrichtung 3 oder 4, die zu dem jeweiligen Meßwertaufnehmer 1 oder 2 gehört, nimmt das in der Feldbusleitung 18, 19 vorhandene CAN-Bussignal auf und übergibt die darin enthaltenen Signaldaten an die Rechnereinheit 11, in der eine Auswertung erfolgt, z. B. Ist-/Sollwertvergleich. Sofern daraufhin erforderlich, gibt die Rechnereinheit 11 einen Steuerimpuls an das Ausgangsrelais 12, so daß die daran angeschlossenen Einrichtungen angesteuert werden, z. B Warneinrichtung, Brenner, Pumpe, Stellventil.

Aufgrund der gemeinsamen Energieleitung 16, 17 und der beidendigen Leitungsterminierung durch die Widerstände 20 - 22 liegt die Versorgungsspannung in den Meßwertaufnehmern 1, 2, sowie den Auswerteeinrichtungen 3, 4 auf gleichem Potential. An den Enden der Feldbusleitung 18, 19 liegt die Spannung auch auf gleichem Potential. Mit Potentialunterschieden verbundene Ausgleichsströme in der Feldbusleitung 18, 19 sind somit vermieden, was den Energiebedarf reduziert. Außerdem liegt die Spannung in der Feldbusleitung 18, 19 im Ruhezustand, d. h. wenn keine Signalübertragung erfolgt, auf einem definierten Potential. Zwischen der Spannung der Feldbusleitung 18, 19 im Ruhezustand und der während der Signalübertragung herrschenden besteht ein definierter, großer Unterschied, also ein großer Störabstand. Die Feldbus-Steuereinrichtungen 8, 10 geben ein differentielles Signal ab, d. h. in dem zu übertragenden Signal wird der eine Binärzustand durch eine positive Gleichspannung und der andere Binärzustand durch eine negative Gleichspannung dargestellt. Nicht die Höhe der jeweiligen Spannung, sondern die Polarität ist als Signal maßgebend. Dies alles führt zu einer eindeutigen und besonders störungsicheren Signalübertragung. Dabei ist auch die Unempfindlichkeit gegenüber elektromagnetischen Einstrahlungen von außen groß ist, zumal die Leiter 18, 19 verdrillt sind.

Die Meßwertaufnehmer 1, 2 werden anlagenbedingt häufig örtlich sehr weit entfernt installiert, während die Auswerteeinrichtungen 3, 4 vorzugsweise in einem Kontrollzentrum angeordnet werden, z. B. in einem gemeinsamen Schaltschrank. Die Netzteile 14 und damit die Energiequellen für sämtliche Überwachungskomponenten 1 - 4 befinden sich in den Auswerteeinrichtungen 3, 4 und damit im Kontrollzentrum. Daher kann bei Bedarf vom Kontrollzentrum die Energiezufuhr zu den entfernt gelegenen Meßwertaufnehmer 1, 2 aus- und eingeschaltet werden. Nach dem Einschalten starten deren Rechnereinheiten 7 und Feldbus-Steuereinrichtungen 8 von einem durch ihre Software definierten Grundzustand aus. Signalstörungen oder -verfälschungen können dadurch behoben werden.

### Bezugszeichenliste:

- 1, 2: Meßwertaufnehmer
- 3, 4: Auswerteeinrichtungen
- 5: Sensor
- 6: Anpassungseinrichtung
- 7: Rechnereinheit
- 8: Feldbus-Steuereinrichtung
- 9: Spannungsumsetzer
- 10: Feldbus-Steuereinrichtung
- 11: Rechnereinheit
- 12: Ausgangsrelais
- 13: Stromnetz
- 14: Netzteil
- 15: Spannungsumsetzer
- 16 - 19: Leiter
- 20 - 22: Widerstände

## Patentansprüche

1. Anordnung zur Signalübertragung zwischen mindestens einem Signalgeber und mindestens einem Signalempfänger mit einem Leitungssystem für die Signalübertragung und für die elektrische Energieversorgung von Signalgeber und Signalempfänger,
**dadurch gekennzeichnet**, daß
- jeder Signalgeber (1, 2) und jeder Signalempfänger (3, 4) eine Feldbus-Steuereinrichtung (8, 10) aufweist,
- das Leitungssystem vier elektrische Leiter (16 - 19) aufweist, von denen zwei Leiter (18, 19) eine Feldbusleitung für die Signalübertragung und die übrigen zwei Leiter (16, 17) eine Energieleitung für die Energieversorgung bilden,
- jeder Signalgeber (1, 2) und jeder Signalempfänger (3, 4) über die Feldbus-Steuereinrichtung (8, 10) an die Feldbusleitung (18, 19) angeschlossen ist,
- jeder Signalgeber (1, 2) und jeder Signalempfänger (3, 4) an die Energieleitung (16, 17) angeschlossen ist und
- an beiden Enden des Leitungssystems jeweils ein erster Widerstand (20) zwischen die beiden Leitern (18, 19) der Feldbusleitung, ein zweiter Widerstand (21) zwischen den einen Leiter (18) der Feldbusleitung und den einen Leiter (16) der Energieleitung und ein dritter Widerstand (22) zwischen den anderen Leiter (19) der Feldbusleitung und den anderen Leiter (17) der Energieleitung geschaltet ist und der Gesamtwiderstand der Widerstände (20 - 22) dem Wellenwiderstand der Feldbusleitung (18, 19) entspricht.

2. Sonde nach Anspruch 1, **dadurch gekennzeichnet**, daß
- als Signalgeber ein Meßwertaufnehmer (1, 2) vorgesehen ist, der einen Sensor (5) und eine Rechnereinheit (7) aufweist, die zwischen den Sensor (5) und die Feldbus-Steuereinrichtung (8) geschaltet ist, und
- der Meßwertaufnehmer (1, 2) seine Betriebsenergie aus der Energieleitung (16, 17) erhält, wobei die Einspeisung in die Energieleitung (16, 17) zentral erfolgt.

3. Sonde nach einem oder beiden der Ansprüche 1 und 2, **dadurch gekennzeichnet**, daß mindestens ein Signalempfänger (3, 4) eine Energiequelle (14) aufweist, die die Betriebsenergie in die Energieleitung (16, 17) einspeist.

4. Sonde nach einem oder mehreren der vorhergehenden Ansprüche, **dadurch gekennzeichnet**, daß die Feldbus-Steuereinrichtung (8, 10) als Controller-Area-Network-Bus (CAN-Bus) ausgebildet sind.

5. Sonde nach einem oder mehreren der vorhergehenden Ansprüche, **dadurch gekennzeichnet**, daß die Leiter (18, 19) der Feldbusleitung miteinander verdrillt sind.
